# EUROPEAN PATENT APPLICATION

(11) **EP 1 347 642 A2**
(43) Date of publication of application: **24.09.2003**
(21) Application number: 03251622.1
(22) Date of filing: 17.03.2003
(51) Int. Cl.: H04N 5/76

(54) **Digital broadcast receiving apparatus, method, and program**

(30) Priority: 18.03.2002 JP 2002073624; 19.07.2002 JP 2002210500
(71) Applicant: MATSUSHITA ELECTRIC INDUSTRIAL CO., LTD., Kadoma-shi, Osaka 571-8501 (JP)
(72) Inventor: Tsujino, Manabu, Seto-shi, Aichi-ken, 489-0919 (JP); Hayashi, Tsutomu, Ibi-Gun, Gifu-ken, 501-0563 (JP); Kawase, Hiroshi, Ama-gun, Aichi-ken, 490-1107 (JP)
(74) Representative: Crawford, Andrew Birkby

(57) **Abstract**

A digital broadcast receiving apparatus that receives a TS and stores into an HDD (401) a partial TS which contains a broadcast program selected by a TS decoder (405). A CPU (410) creates broadcast program attachment information from PMT or the like in which control information of the selected broadcast program is written, and stores the broadcast program attachment information into a flash ROM (411). The broadcast program attachment information contains copy control information, bit rate information, and PIDs of CAT and EMM. When outputting the partial TS to an external VCR (420) for copying, the digital broadcast receiving apparatus refers to the broadcast program attachment information, and gives instructions as necessary to update PMT or set the recording mode in the VCR (420), prior to the output of the partial TS to the external VCR (420).

## Description

### BACKGROUND OF THE INVENTION

### (1) Field of the Invention

The present invention relates to a digital broadcast receiving apparatus that stores a received transport stream (hereafter referred to as TS) as a partial TS, and reproduces a broadcast program contained in the stored partial TS, or controls copying of the broadcast program into an external storage apparatus.

It should be noted here that a partial TS is a bitstream obtained by removing TS packets, which do not relate to one or more specifically selected broadcast programs, from the TS packets that conform to MPEG (Moving Picture Experts Group) 2 ("BS Digital Broadcast Receiving Apparatus", Chapter 9, 9.1.7 to 9.1.9, ARIB STD-B2, version 1.1, Association of Radio Industries and Businesses).

### (2) Description of the Related Art

Japanese Laid-Open Patent Application No. 11-168718 discloses a digital broadcast receiving apparatus that receives, stores, and reproduces a TS. In general, a TS includes a plurality of broadcast programs multiplexed therein. Of these, only one or more broadcast programs are stored as selected by users, the rest of the broadcast programs, which do no relate to the selected programs, are stored as a partial TS.

Meanwhile, the partial TS contains information necessary for reproducing the broadcast programs such EMM (Entitlement Management Message) in which information regarding the contract is written, CAT (Conditional Access Table) that specifies packet identifiers of TS packets for transmitting the EMM, as well as PAT (Program Association Table) and PMT (Program Map Table), where these pieces of information are repeatedly multiplexed therein. The PMT contains DTCP_CCI (Digital Transmission Content Protection_Copy Control Information) which includes information concerning a digital copy of a broadcast program.

The PMT also contains bit rate information that corresponds to a recording mode of a broadcast program.

The following problems arise when a broadcast program contained in a partial TS is output to an external storage apparatus to be stored therein.

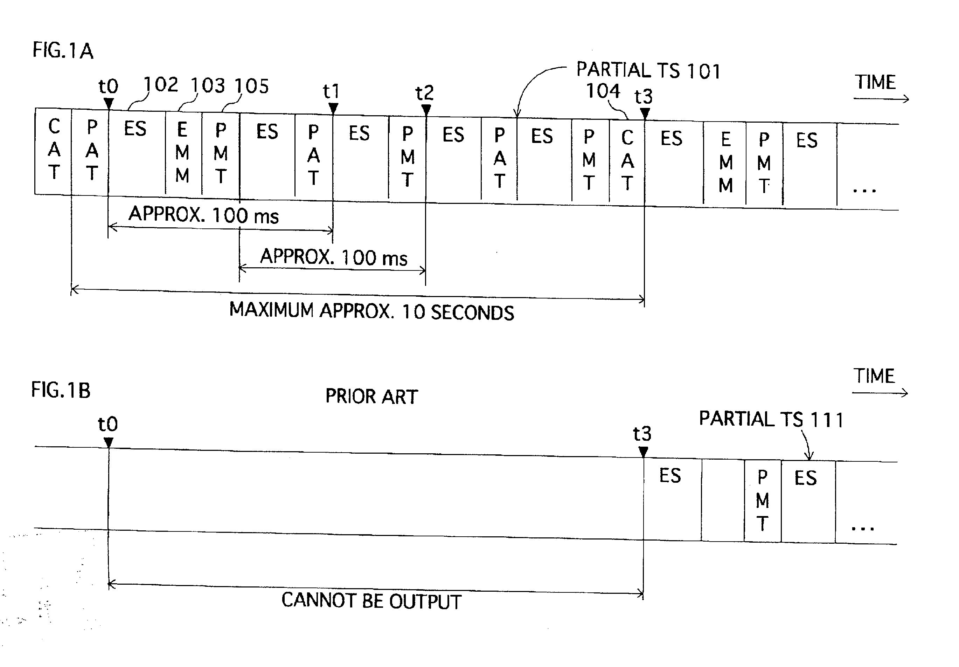

Fig. 1A is a schematic illustration of a partial TS stored in a digital broadcast receiving apparatus. As shown in Fig. 1A, a partial TS 101 includes PATs, PMTs, CATs, and EMMs, as well as elementary streams (ES) 102 that constitute a broadcast program.

The first problem is as follows. When a conventional digital broadcast receiving apparatus receives, at a time t0, a user instruction to output a partial TS to an external storage apparatus to be stored therein, the conventional digital broadcast receiving apparatus interprets PMT to judge whether a copy is available, and removes EMM that should not be output to the external storage apparatus. Due to this operation, the conventional digital broadcast receiving apparatus cannot output the partial TS until a time t3 as shown in Fig. 1B.

The reason for this is as follows. As shown in Fig. 1A, the first PAT is extracted at a time t1. Since the PID of the PMT is included in the PAT, the first PMT is extracted at a time t2. The time period between the time t0 and t2 is approximately 100 ms. The digital broadcast receiving apparatus refers to the extracted PMT to judge whether the ESs constituting the broadcast program can be output to the external storage apparatus . However, the digital broadcast receiving apparatus still has a work of removing the CAT and EMM that should not be output to the external storage apparatus. It is at the time t3 that the digital broadcast receiving apparatus extracts the CAT and obtain the PID of the EMM. After this, the EMM is removed, and the partial TS 111 is output to the external storage apparatus.

As understood from the above description, the digital broadcast receiving apparatus cannot output the ESs corresponding to the first part of the broadcast program, for approximately 10 seconds at the maximum since the reception of the user instruction.

The second problem concerns recording of the partial TS in the external storage apparatus after receiving it from the digital broadcast receiving apparatus.

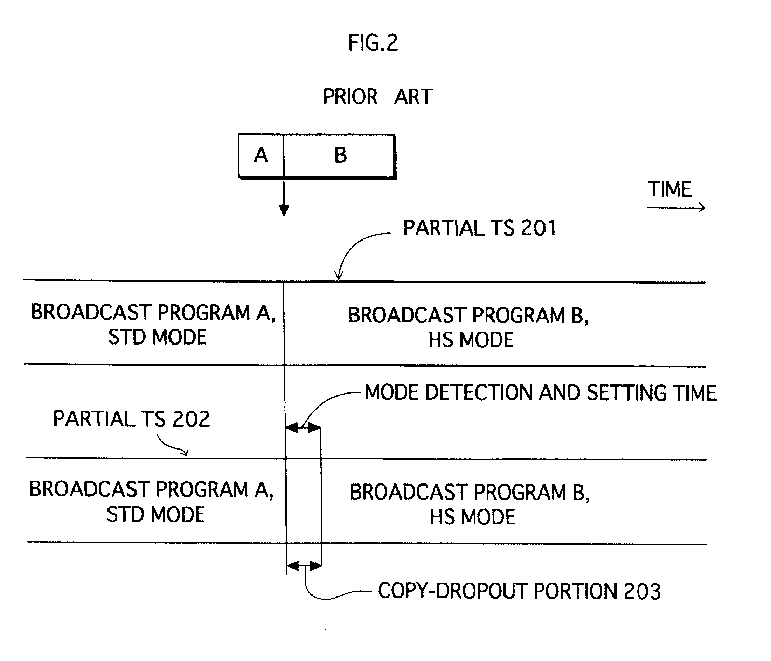

Fig. 2 is a schematic illustration of (i) a partial TS output from a conventional digital broadcast receiving apparatus to an external storage apparatus and (ii) a partial TS recorded in the external storage apparatus, where broadcast programs A and B are output in sequence.

In a partial TS 201 that is output to the external storage apparatus, the broadcast program A is presented with a standard image quality, and the broadcast program B is presented with a high image quality for the high-definition TV. As a result, the broadcast program A is recorded in the STD mode, and the broadcast program B is recorded in the HS mode.

The external storage apparatus receives the partial TS 201, and records the broadcast program A in the STD mode. However, the external storage apparatus fails to record the first portion of the broadcast program B while it obtains the PMT, interprets it to detect the recording mode, and sets the recording mode in the external storage apparatus. As a result, the partial TS 202 having been recorded in the external storage apparatus has a copy-dropout portion 203.

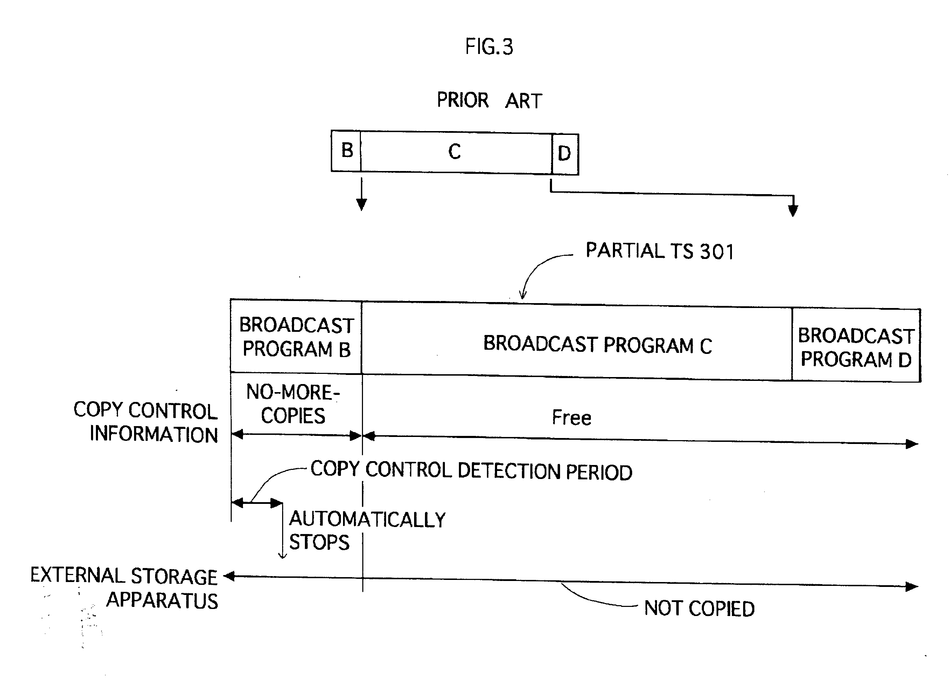

Fig. 3 shows a partial TS containing a broadcast program C as a target program to be copied to a conventional external storage apparatus, and its recording state.

A partial TS 301 also contains, as offsets, broadcast programs B and D that are respectively the preceding and succeeding programs of the broadcast program C. The copy control information written in the PMT or the like indicates that the broadcast program C is set to "free", and the broadcast program B to "no_more_copies". The external storage apparatus receives the partial TS 301 and interprets the copy control information in regard with the broadcast program B, which is an offset, and if it continues to detect the "no_more_copies" for a certain time period, automatically stops recording the partial TS 301. When this happens, even if the copy control information for the broadcast program C being the recording target is set to "free", the broadcast program C is not recorded.

### SUMMARY OF THE INVENTION

The first object of the present invention is therefore to provide a digital broadcast receiving apparatus that can output a partial TS to an external storage apparatus without a dropout in the first portion thereof.

The second object of the present invention is to provide a digital broadcast receiving apparatus that prevents an external storage apparatus from failing to record a partial TS, which is received from the digital broadcast receiving apparatus, due to a change of the recording mode or due to the copy control information, and that prevents the external storage apparatus from failing to record a portion of the partial TS.

The first object is fulfilled by a digital broadcast receiving apparatus connected to an external storage apparatus, comprising: a first storage unit; a first control unit operable to store into the first storage unit a partial transport stream which is contained in a transport stream sent from outside and includes (i) elementary streams constituting a broadcast program and (ii) control information for controlling the broadcast program, and to create, from the control information, broadcast program attachment information which is used in outputting the partial transport stream to the external storage apparatus; a second storage unit operable to store the created broadcast program attachment information with indication of a correspondence with the partial transport stream stored in the first storage unit; a second control unit operable to, in accordance with the broadcast program attachment information, give an instruction to update the control information in the first storage unit; and an interface operable to receive the update instruction from the second control unit, read the partial transport stream from the first storage unit, update the control information contained in the read partial transport stream, and output the partial transport stream with the updated control information, to the external storage apparatus.

With the above-described construction, the interface recognizes in advance the control information to be updated. This enables the digital broadcast receiving apparatus to output the partial transport stream to the external storage apparatus from the start while updating the control information.

The above digital broadcast receiving apparatus may further comprise a receiving unit operable to receive an instruction to copy or move a broadcast program, wherein the second control unit obtains from the second storage unit a piece of broadcast program attachment information that corresponds to a partial transport stream containing the broadcast program specified in the received instruction.

With the above-described construction, the digital broadcast receiving apparatus can output the partial transport stream containing the specified broadcast program to the external storage apparatus.

In the above digital broadcast receiving apparatus, the first control unit may include: a copy control information reading subunit operable to read copy control information written in a Program Map Table contained in the control information, and the second control unit may include: a copy control information update instructing subunit operable to, if copy control information in the piece of broadcast program attachment information is set to "copy_once", give an instruction to set the copy control information in the Program Map Table to "copy_once" and "moving", and the interface updates the Program Map Table in accordance with the instruction given by the copy control information update instructing subunit and outputs the updated Program Map Table.

With the above-described construction, the digital broadcast receiving apparatus can output the partial transport stream containing the copy control information set to "copy_once", to the external storage apparatus.

In the above digital broadcast receiving apparatus, the second control unit may further include a deleting subunit operable to, if the interface has output the partial transport stream by setting the control information in the Program Map Table to "moving", delete the output partial transport stream from the first storage unit, and after the outputting is completed, delete the piece of broadcast program attachment information from the second storage unit.

With the above-described construction, the digital broadcast receiving apparatus can delete a partial transport stream after moving it to the external storage apparatus by the "move" function.

In the above digital broadcast receiving apparatus, the partial transport stream stored in the first storage unit may include at least two broadcast programs that are sequential to each other in a time domain, the first control unit includes a bit rate information reading subunit operable to read bit rate information for each broadcast program from a Program Map Table included in the control information, the second control unit may include a recording mode instructing subunit operable to obtain bit rate information from the broadcast program attachment information stored in the second storage unit, and if a bit rate for a preceding broadcast program is different from a bit rate for a succeeding broadcast program, give an instruction to set a recording mode corresponding to the bit rate for the succeeding broadcast program, and the interface, upon receiving the instruction to set the recording mode from the recording mode instructing subunit, instructs the external storage apparatus to set a recording mode at a time a predetermined time period earlier than a time when the partial transport stream containing the broadcast program starts to be output.

The above-described construction prevents a problem that the digital broadcast receiving apparatus cannot output elementary streams for the specified broadcast program until it detects transport packets which should not be output to the external storage apparatus, and deletes the detected transport packets.

The second object of the present invention is fulfilled by the above digital broadcast receiving apparatus in which the partial transport stream stored in the first storage unit includes at least two broadcast programs that are sequential to each other in a time domain, the first control unit includes a bit rate information reading subunit operable to read bit rate information for each broadcast program from a Program Map Table included in the control information, the second control unit includes a recording mode instructing subunit operable to obtain bit rate information from the broadcast program attachment information stored in the second storage unit, and if a bit rate for a preceding broadcast program is different from a bit rate for a succeeding broadcast program, give an instruction to set a recording mode corresponding to the bit rate for the succeeding broadcast program, and the interface, upon receiving the instruction to set the recording mode from the recording mode instructing subunit, instructs the external storage apparatus to set a recording mode at a time a predetermined time period earlier than a time when the partial transport stream containing the broadcast program starts to be output.

The above-described construction solves a problem that when the copy target broadcast programs change, the first portion of the second broadcast program fails to be copied due to a change of the recording mode.

In the above digital broadcast receiving apparatus, the predetermined time period may range from a time when the external storage apparatus receives the instruction to set the recording mode to a time when a recording operation is stabilized.

With the above-described construction, it is possible to set the recording mode with empirically determined timing.

In the above digital broadcast receiving apparatus, the broadcast program in the partial transport stream stored in the first storage unit may be recorded therein by a timer-controlled recording as a target program, and the partial transport stream also includes, as an offset, another broadcast program that precedes the target program, the first control unit includes: an offset time extracting subunit operable to extract a time period of the offset from an Event Information Table contained in the control information; a copy control information creating subunit operable to create, from a Program Map Table contained in the control information, copy control information in relation to the target program and the offset, the second control unit includes: a control information updating subunit operable to extract a piece of control information, which corresponds to a point in time a predetermined time period α later than a start of the target program, and update the extracted control information, a default value of the time period α being determined from the control information; an output start instructing subunit operable to, if the copy control information is set to "free" for both the target program and the offset, give an instruction to start recording in the external apparatus, and give an instruction to output the partial transport stream from a start of the offset; and an update information notifying subunit operable to give an instruction to set the piece of control information updated by the control information updating subunit in the partial transport stream starting at a point in time a predetermined time period N earlier than the start of the target program, the predetermined time period N ranging from a time when the external storage apparatus receives an instruction to set a recording mode to a time when a recording operation is stabilized, wherein the interface outputs to the external storage apparatus the instruction to start recording, then outputs the partial transport stream from the start of the offset, and sets the updated piece of control information in the partial transport stream starting at a point in time the predetermined time period N earlier than the start of the target program, then outputs the partial transport stream.

With the above-described construction, the external storage apparatus can completely record a partial TS, which is received from the digital broadcast receiving apparatus and includes a broadcast program that is a target of a copy.

In the above digital broadcast receiving apparatus, if the copy control information is set to "free" for the target program and is set to "once" for the offset, the output start instructing subunit may give an instruction to stand by for recording in the external storage apparatus, then after the update information notifying subunit gives an instruction to set the updated piece of control information in the partial transport stream, give an instruction to output the target program in the partial transport stream to the external storage apparatus so as to start recording.

The above-described construction solves a problem that a target main program cannot be copied due to the control information indicating that an offset broadcast program cannot be copied.

The first object is fulfilled by a digital broadcast receiving method for use in a digital broadcast receiving apparatus connected to an external storage apparatus, comprising: a first control step for storing into a first storage area a partial transport stream which is contained in a transport stream sent from outside and includes (i) elementary streams constituting a broadcast program and (ii) control information for controlling the broadcast program, and creating, from the control information, broadcast program attachment information, which is used in outputting the partial transport stream to the external storage apparatus, and storing into a second storage area the created broadcast program attachment information with indication of a correspondence with the partial transport stream stored in the first storage area; a second control step for, in accordance with the broadcast program attachment information, giving an instruction to update the control information in the first storage area; and an outputting step for receiving the update instruction, reading the partial transport stream from the first storage area, updating the control information contained in the read partial transport stream, and outputting the partial transport stream with the updated control information, to the external storage apparatus.

With the above-described construction, the digital broadcast receiving apparatus can output a complete partial TS to the external storage apparatus without a dropout in the first portion thereof.

The first object is also fulfilled by a digital broadcast receiving program applied to a digital broadcast receiving apparatus which includes a computer connected to an external storage apparatus, the digital broadcast receiving program causing the computer to execute: a first control step for storing into a first storage area a partial transport stream which is contained in a transport stream sent from outside and includes (i) elementary streams constituting a broadcast program and (ii) control information for controlling the broadcast program, and creating, from the control information, broadcast program attachment information, which is used in outputting the partial transport stream to the external storage apparatus, and storing into a second storage area the created broadcast program attachment information with indication of a correspondence with the partial transport stream stored in the first storage area; a second control step for, in accordance with the broadcast program attachment information, giving an instruction to update the control information in the first storage area; and an outputting step for receiving the update instruction, reading the partial transport stream from the first storage area, updating the control information contained in the read partial transport stream, and outputting the partial transport stream with the updated control information, to the external storage apparatus.

When the above-described digital broadcast receiving program is applied to a digital broadcast receiving apparatus which includes a large-capacity storage apparatus, the digital broadcast receiving apparatus can output a complete partial TS to the external storage apparatus without a dropout in the first portion thereof.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
Fig. 1A is a schematic illustration of a partial TS stored in a digital broadcast receiving apparatus;
Fig. 1B is a schematic illustration of a partial TS output from a conventional digital broadcast receiving apparatus to an external storage apparatus;
Fig. 2 is a schematic illustration of (i) a partial TS output from a conventional digital broadcast receiving apparatus to an external storage apparatus and (ii) a partial TS copied in the external storage apparatus;
Fig. 3 shows a case where copying of a partial TS output from a conventional digital broadcast receiving apparatus to an external storage apparatus ends incompletely, due to the settings in the copy control information;
Fig. 4 shows the construction of a digital broadcast receiving apparatus as the first embodiment of the present invention
Fig. 5 is a schematic illustration of the partial TSs stored in a HDD in the first embodiment;
Fig. 7A shows an example of contents of a PMT included in a TS that is input to the TS decoder in the first embodiment;
Fig. 7B shows an example of contents of a PMT included in a partial TS stored in a HDD in the first embodiment;
Fig . 8 shows an example of the broadcast program attachment information stored in the flash ROM in the first embodiment;
Fig. 9 is a flowchart of recording the broadcast program attachment information when a partial TS is recorded onto a HDD in the first embodiment;
Fig. 10 is a flowchart of an operation of outputting a partial TS a VCR in the first embodiment;
Fig. 11 shows an example of the broadcast program attachment information stored in a flash ROM in the second embodiment;
Fig. 12 is a schematic illustration of a partial TS composed of a broadcast program C and an offset thereof, the broadcast program C having been recorded onto a HDD by a timer-controlled recording in the second embodiment;
Fig. 13 is a flowchart of an operation in the second embodiment;
Fig. 14 is a flowchart (part 1) of a detailed operation of S1310 in the flowchart shown in Fig. 13;
Fig. 15 is a flowchart (part 2) of the detailed operation of S1310 in the flowchart shown in Fig. 13; and
Fig. 16 is a flowchart of a detailed operation of S1312 in the flowchart shown in Fig. 13.

### DESCRIPTION OF THE PREFERRED EMBODIMENT

The following describes digital broadcast receiving apparatuses that are embodiments of the present invention, with reference to the attached drawings.

### Embodiment 1

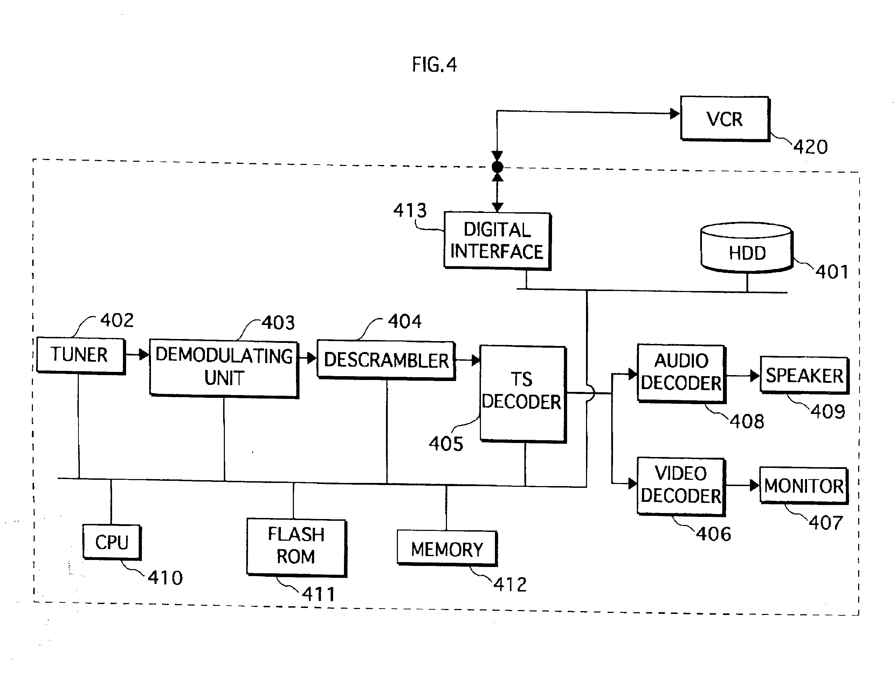

Fig. 4 shows the construction of a digital broadcast receiving apparatus as the first embodiment of the present invention.

The digital broadcast receiving apparatus includes: a hard diskdrive (HDD) 401 embedded therein; a tuner 402; ademodulating unit 403; a descrambler 404; a TS decoder 405; a video decoder 406; a monitor 407; an audio decoder 408; a speaker 409; a CPU 410; a flash ROM 411; a memory 412; and a digital interface 413. The digital interface 413 is connected to a videocassette recorder (VCR) 420 being an external storage apparatus, based on the IEEE1394 protocol.

The HDD 401 stores partial TSs, where the partial TSs include a broadcast program, among broadcast programs multiplexed in a TS transmitted from a broadcast station, that has been instructed by the user to be recorded.

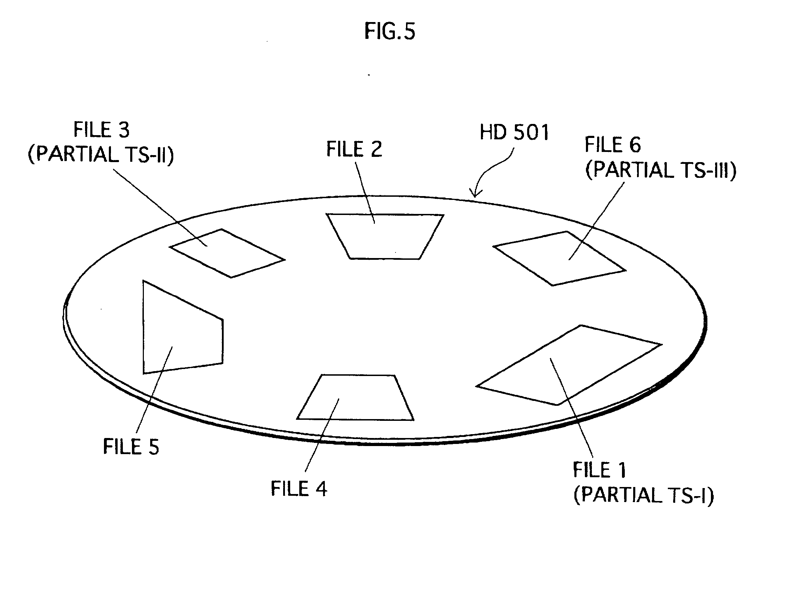

Fig. 5 is a schematic illustration of the partial TSs stored in a HD 501 which is a recording medium included in the HDD 401. Partial TS-I, partial TS-II, and partial TS-III are stored as files 1, 3, and 6, respectively.

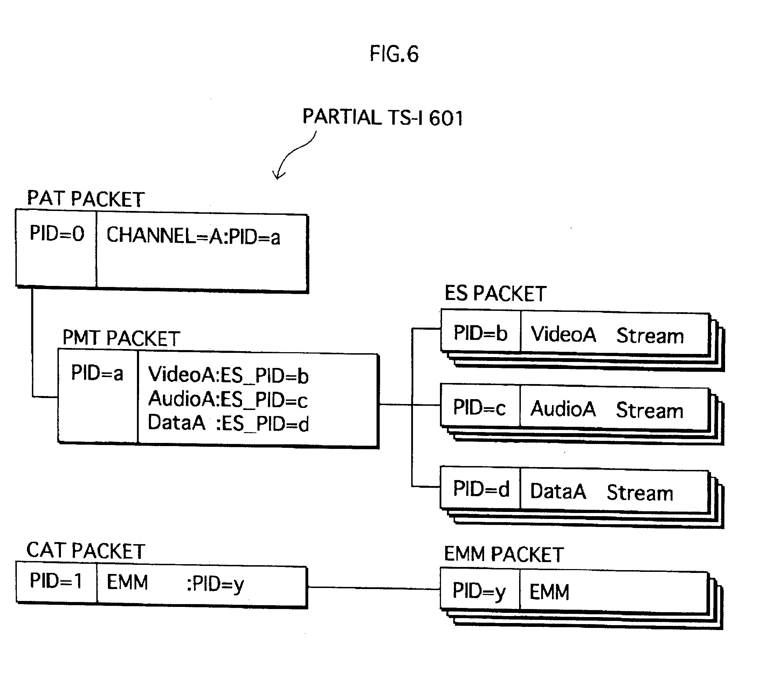

Fig. 6 is a schematic illustration of a partial TS, as an example. A partial TS-I 601 includes a broadcast program that is broadcast on a channel A. The partial TS-I 601 includes a PAT packet, a PMT packet, ES packets respectively containing video, audio, and data of the broadcast program, and an EMM packet. The partial TS-I 601 also includes an SIT (Service Information Table) packet and other information, though they are omitted here.

The tuner 402, under control of the CPU 410, has an antenna (not illustrated) receive a transponder having a specified frequency, obtains a modulated wave, and outputs the obtained modulated wave to the demodulating unit 403. The demodulating unit 403 demodulates the modulated wave to obtain a multiplexed TS packet, and outputs the obtained TS packet to the descrambler 404. The descrambler 404 descrambles the TS and outputs the descrambled TS to the TS decoder 405. If a TS received from a broadcast station has not been scrambled, a demodulated TS is directly output from the demodulating unit 403 to the TS decoder 405.

The TS decoder 405, under control of the CPU 410, decodes the TS it receives. In the case where a broadcast program is to be only viewed, the TS decoder 405 stores into the memory 412 such tables as PAT and PMT defined by a PSI (Program Specific Information) multiplexed in the TS, outputs an ES packet containing audio data to the audio decoder 408, and outputs an ES packet containing video data to the video decoder 406. The audio decoder 408 decodes an audio ES to an audio signal, and has the speaker 409 output a sound. The video decoder 406 decodes a video ES to a video signal, and has the monitor 407 output an image.

When recording a broadcast program into the HDD 401, the TS decoder 405, under control of the CPU 410, extracts, from the TS, ESs containing video data, audio data or the like of the broadcast program, a PAT, a PMT, a CAT, an EMM or the like, and stores extracted information into the HDD 401 as a partial TS. During this operation, a DTCP descriptor to be added to the PMT is created from a digital copy control descriptor and a content availability descriptor that are contained in the PMT, and the created DTCP descriptor is output.

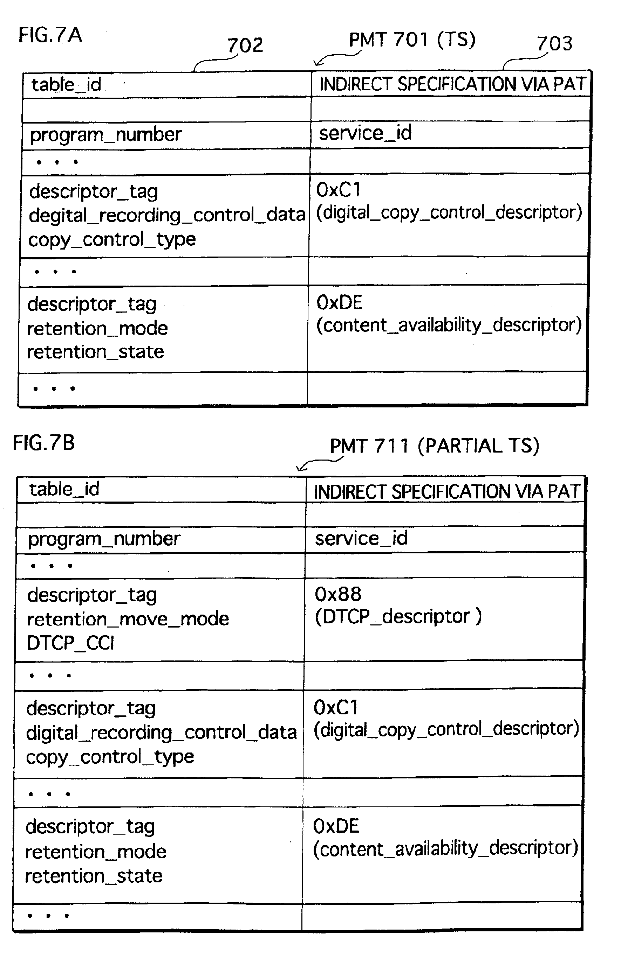

Fig. 7A shows an example of contents of a PMT included in a TS that is input to the TS decoder 405. Items contained in a left column 702 show contents of a PMT 701, and information related to the items are given in a right column 703.

"Table-id" in the left column 702 indicates a table identifier identifying the PMT 701, used for extracting the PMT 701, and is specified by a PAT. A digital copy control descriptor identified by "0xC1" and a content availability descriptor identified by "0xDE" constitute copy control information from which a DTCP descriptor is created.

Fig. 7B shows an example of contents of a PMT included in a partial TS stored in the HDD 401. A PMT 711, compared with the PMT 701, additionally has a DTCP descriptor identified by "0x88". The DTCP descriptor identified by "descriptor_tag" "0x88" contains "retention_move_mode" and "DTCP_CCI". The retention_move_mode indicates a move state and is set to "0" to indicate being in a move state, or "1" to indicate being in a non-move state. The DTCP_CCI indicates how copy is available and is set to "00" to indicate "free", "10" to indicate "copy_once" (that is, copy is available only once), or "01" to indicate "no_more_copies" (that is, copy is not available any more).

The TS decoder 405, under control of the CPU 410, if the digital copy control descriptor in the PMT indicates a one-generation copy, outputs a DTCP descriptor with a DTCP_CCI set to "01" indicating "no_more_copies".

The CPU 410 obtains values of the retention_move_mode and DTCP_CCI, which are written in the DTCP descriptor in the PMT in the output partial TS, in units of broadcast programs or ESs constituting a broadcast program. The CPU 410 also causes the TS decoder 405 to obtain from a CAT packet a value of "EMM_PID" identifying an EMM packet. The CPU 410 then causes the TS decoder 405 to store the obtained values into the flash ROM 411 as broadcast program attachment information by correlating them with a partial TS that include the broadcast program stored in the HDD 401.

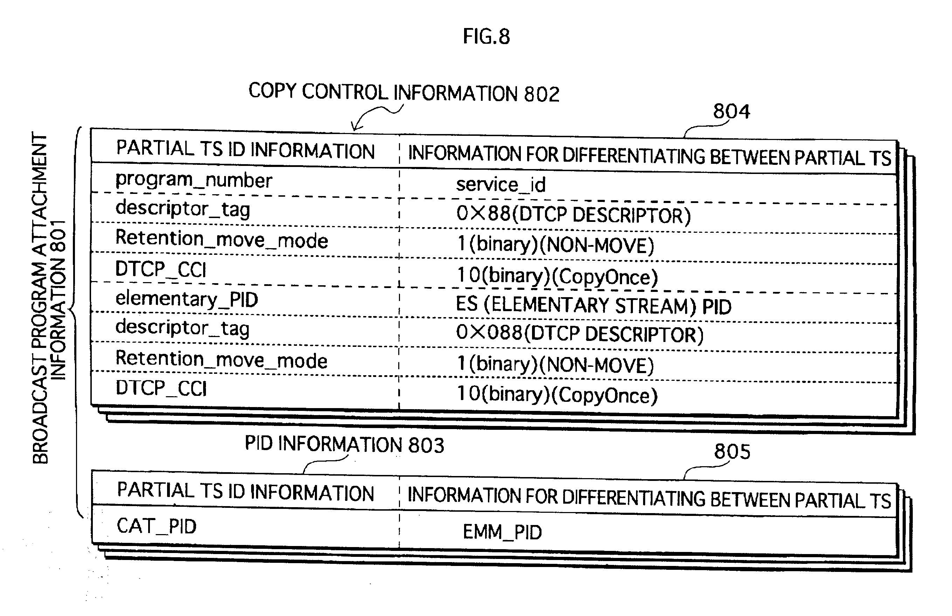

Fig. 8 shows an example of the broadcast program attachment information stored in the flash ROM 411. Broadcast program attachment information 801 is composed of (i) copy control information 802 obtained from the PMT and (ii) PID information 803 concerning the CAT and the EMM. The copy control information 802 and the PID information 803 respectively contain information 804 and 805 that are both information for differentiating a partial TS corresponding to a broadcast program stored in the HDD 401. If, for example, the broadcast program is included in the partial TS-I as shown in Fig. 5, its file name "file 1" is written in each of the information 804 and 805.

When being instructed to reproduce a broadcast program stored in the HDD 401, reads a partial TS including the specified broadcast program from the HDD 401, extracts the PAT, PMT, EMM, SIT and the like from the partial TS and stores them into the memory 412, and outputs audio ESs to the audio decoder 408 and video ESs to the video decoder 406, respectively.

The CPU 410 controls each component in accordance with a control program stored in the flash ROM.

Upon receiving an instruction from a receiving unit (not illustrated) to record into the HDD 401 a broadcast program transmitted from a broadcast station, the CPU 410 instructs the tuner 402 to select a channel, and instructs the TS decoder 405 to record the partial TS and the broadcast program attachment information into the HDD 401 and the flash ROM 411, respectively.

Upon receiving an instruction from the receiving unit to copy the broadcast program included in the partial TS stored in the HDD 401, obtains from the flash ROM 411 the broadcast program attachment information 801 of the partial TS including the broadcast program.

If the CPU 410 receives an instruction to copy a partial TS recorded in the HDD 401 when the DTCP_CCI in the copy control information 802 is set to "10" indicating "copy_once", the CPU 410, for example, instructs the video decoder 406 to display a message "copy is not available" on the monitor 407 since the copy is prohibited and recording by the external VCR 401 is not available.

If the CPU 410 receives an instruction to move a partial TS recorded in the HDD 401 when the DTCP_CCI in the copy control information 802 is set to "10" indicating "copy_once", the CPU 410 instructs the digital interface 413 to change the value of the retention_move_mode in the PMT from "1" to "0", namely from "being in a non-move state" to "being in a move state", and to change the value of the DTCP_CCI from "01" to "10", namely from "no_more_copies" to "copy_once".

When the DTCP_CCI in the copy control information 802 is set to "00" indicating "free" where copy is available as necessary, there is no need to change the copy control information in the PMT.

The CPU 410 also notifies the digital interface 413 of the PIDs of the CAT and the EMM written in the PID information 803, instructing the digital interface 413 not to output the CAT and the EMM, and instructing to read the partial TS including the specified broadcast program.

The flash ROM 411 stores a control program that enables the CPU 410 to operate as a control unit. The flash ROM 411 also stores pieces of broadcast program attachment information 801 shown in Fig. 8 that are correlated by the TS decoder 405 with partial TSs including broadcast programs recorded in the HDD 401.

The memory 412 stores control information such as a PAT and a PMT multiplexed in a TS transmitted from a broadcast station.

The digital interface 413 is connected to the VCR 420 being an external storage apparatus, and outputs partial TSs to the VCR 420 in conformance with the protocol defined in IEEE1394.

Upon receiving from the CPU 410 an instruction to rewrite values of the DTCP_CCI and the retention_move_mode constituting the copy control information of the PMT included in the partial TS, an instruction to delete the CAT and the EMM, and an instruction to read the specified partial TS, the digital interface 413 reads the specified partial TS from the HDD 401, updates the contents of the PMT, and outputs the partial TS, from which the CAT and the EMM have been deleted, to the VCR 420.

As described above, the digital interface 413 can output the specified partial TS to the VCR 420 without cutting ESs constituting the first portion of the first broadcast program of the specified partial TS since the digital interface 413 is notified in advance of contents of a PMT change or PIDs of the CAT and EMM to be deleted.

In the case of outputting the partial TS 101 shown in Fig. 1A, it is possible to output the partial TS 101, starting with the ES 102 that starts at the time t0, the following EMM 103 and CAT 104 and the like having been deleted, and the PMT 105 and the like having been updated.

When outputting a partial TS with the value of the retention_move_mode set to "0", the CPU 410 outputs the partial TS and at the same time deletes the partial TS from the HDD 401. After outputting all the specified partial TSs, the CPU 410 deletes the broadcast program attachment information related to the output partial TSs.

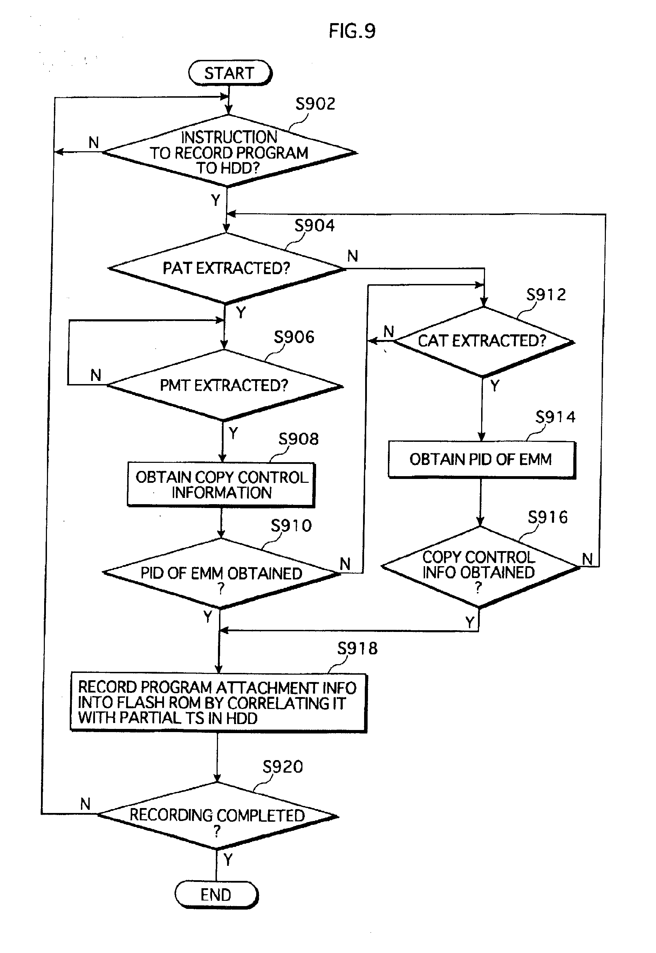

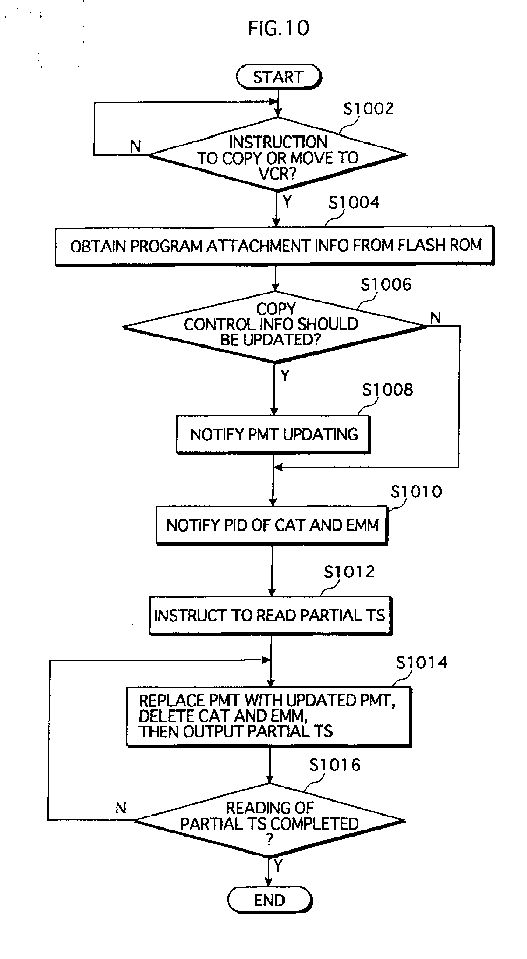

Now, the operation of the present embodiment will be described with reference to the flowchart shown in Figs. 9 and 10. First, an operation of recording the broadcast program attachment information into the embedded HDD 401 will be described with reference to the flowchart shown in Fig. 9, where the operation is performed when the user specifies a broadcast program among a TS transmitted from the broadcast station, and a partial TS including the specified broadcast program is recorded.

The CPU 410 waits for an instruction to record a broadcast program into the HDD 401 (S902), and if the instruction is received, instructs the TS decoder 405 to extract ESs, a PAT and the like that constitute the specified broadcast program.

After extracting a PAT (S904), the TS decoder 405 extracts a PMT using a PID of the PMT written in the extracted PAT as a filtering condition (S906). After confirming the extraction of the PMT, the TS decoder 405 obtains copy control information from the extracted PMT, the copy control information being a digital copy control descriptor and a content availability descriptor, and creates a DTCP descriptor from the obtained copy control information (S908). The TS decoder 405 then judges whether a PID of an EMM has been obtained (S910). If the judgment result is affirmative, the control moves to S918, and if the judgment result is negative, the control moves to S912.

In S912, the TS decoder 405 waits for a CAT to be extracted, and if the CAT is extracted, obtains a PID of an EMM from the extracted CAT (S914). The TS decoder 405 then judges whether copy control information has been obtained (S916). If the judgment result is negative, the control returns to S904, and if the judgment result is affirmative, the control goes to S918.

In S918, the TS decoder 405 stores the obtained copy control information and PIDs of EMMs or the like into the flash ROM 411 as broadcast program attachment information by correlating them with a file name of a partial TS recorded in the HDD 401. The TS decoder 405 then judges whether the recording of the specified broadcast program has completed (S920). If the judgment result is affirmative, the process ends, and if the judgment result is negative, the control returns to S902.

Now, an operation of outputting a partial TS including the specified broadcast program to the VCR 420, an external storage apparatus, will be described with reference to the flowchart shown in Fig. 10.

The CPU 410 waits for an instruction by the user to copy or move a broadcast program from the HDD 401 to the VCR 420 (S1002), and if the instruction is received, obtains apiece of broadcast program attachment information 801 correlated with the specified broadcast program from the flash ROM 411 (S1004).

The CPU 410 judges whether the copy control information should be updated by referring to the value of the DTCP_CCI in the copy control information 802 in the obtained piece of broadcast program attachment information 801. That is to say, if the value is "00", there is no need to update the copy control information; if the value is "10" and the move instruction has been received, the value of the DTCP_CCI in the PMT in the partial TS stored in the HDD 401 should be updated from "01" to "10", and the value of the retention_move_mode should be updated from "1" to "0"; and if the value is "10" and the copy instruction has been received, a message "copy is not available" is presented to the user, and the process ends (S1006).

If the judgment result in S1006 is negative, the CPU 410 moves to S1010. If the judgment result in S1006 is affirmative, the CPU 410 moves to S1008 and notifies the digital interface 413 of the contents of the updating of the copy control information in the PMT (S1008).

The CPU 410 then notifies the digital interface 413 of the PIDs of the CAT and EMM to be deleted from the partial TS (S1010), and instructs the digital interface 413 to read the specified partial TS (S1012).

The digital interface 413 read the specified partial TS from the HDD 401, replaces the PMT in the partial TS with the updated PMT, outputs the partial TS, from which the CAT and EMM have been deleted, to the VCR 420 (S1014), and continues the operation in S1014 until the reading of the partial TS from the HDD 401 is completed (S1016).

In the present embodiment, the broadcast program attachment information 801 is stored in the flash ROM 411. However, the broadcast program attachment information 801 may be stored in the HDD 401 as a file different from the partial TS. For example, the broadcast program attachment information 801 may be stored as the file 4 shown in Fig. 3.

Also, in the present embodiment, the copy control information is only explained in relation to updating of the DTCP descriptor in the PMT. Meanwhile, information EMI containing copy control information that is different from the one in the partial TS is also output when the partial TS is output to the VCR 420. The EMI, which is updated in the same way as the DTCP_CCI of the DTCP descriptor in the PMT in the partial TS, is, for example, stored in the file 2 shown in Fig. 5. The EMI is information conforming to the IEEE1394 protocol.

Accordingly, when the copy control information in the EMI is set to "no_more_copies", the value of the retention_move_mode should be changed to "0", and the copy control information in the EMI should be changed to "copy_once".

Also, in the present embodiment, the broadcast program attachment information is obtained and stored when a broadcast program is recorded. However, instead of this, when an instruction to output a partial TS to the VCR 420, the broadcast program attachment information may be obtained prior to issuing of the read instruction to the digital interface 413. In this case, however, the output of the partial TS to the VCR 420 is delayed as much as it requires to obtain the broadcast program attachment information.

### Embodiment 2

Now, a digital broadcast receiving apparatuses that is the second embodiment of the present invention will be described. Since it has the same construction as Embodiment 2, it will be described with reference to the construction shown in Fig. 4.

In Embodiment 2, an external storage apparatus outputs control information to a VCR 420 with certain timing to prevent the problem that a copy is not available or a copy dropout is generated when a copy target broadcast program changes from one to another in the VCR 420.

For achieving the above-stated purpose, Embodiment 2 has the following construction, as well as the construction of Embodiment 1.

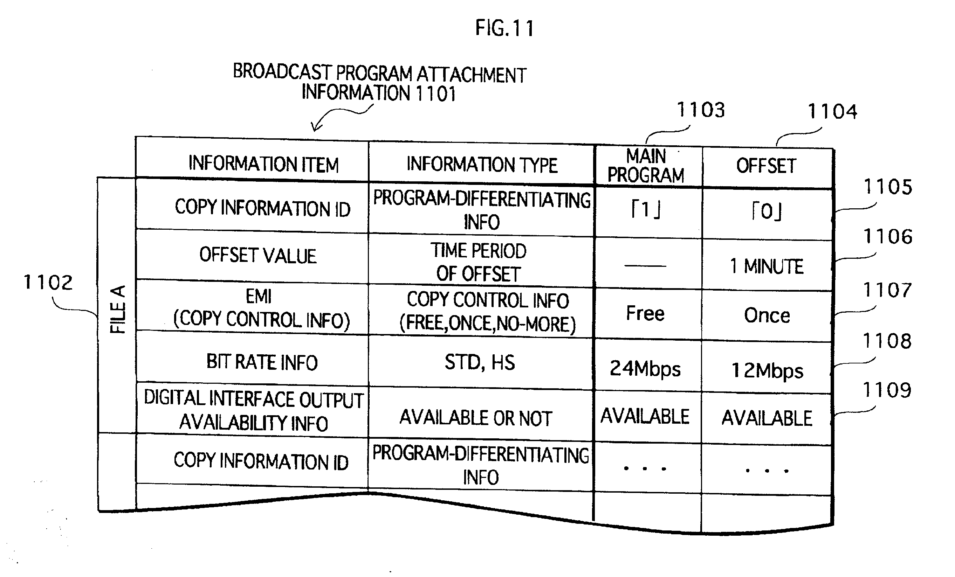

Fig. 11 shows an example of the broadcast program attachment information stored in the flash ROM 411.

A piece of broadcast program attachment information 1101 is correlated with a partial TS stored in the HDD 401 as a file A 1102.

The file A contains a broadcast program C having been recorded by a timer-controlled recording, a broadcast program B that is an offset having been transmitted prior to the broadcast program C, and a broadcast program D that is an offset following the broadcast program C. In this example, information concerning the broadcast program D is omitted.

The broadcast program attachment information 1101 contains items such as a copy information ID 1105 in relation to the broadcast program (main program) 1103, which has been recorded by a timer-controlled recording, and the broadcast program (offset) 1104.

The copy information ID 1105 has values "1" and "0" indicating the main program and the offset, respectively.

An offset value 1106 is a predetermined value representing a recording time that is added to before and after the main program so that the main program can be recorded completely. The offset value 1106 is obtained by referring to an EIT (Event Information Table).

An EMI 1107 is copy control information that indicates whether copy is available. In this example, the EMI 1107 is set to "free" for the main program, and "copy_once" for the offset.

Bit rate information 1108 specifies a recording mode related to the image quality which is classified into standard (represented as "STD") and high-quality (represented as "HS"). In this example, the bit rate information 1108 is set to 24 Mbps (bit per second), which corresponds to the high-quality, for the main program, and is set to 12 Mbps, which corresponds to the standard, for the offset.

Digital interface output availability information 1109 indicates whether data can be output in conformance with the IEEE1394 protocol. In this example, the digital interface output availability information 1109 is set to "available" for both the main program and the offset.

The EMI 1107, bit rate information 1108, and digital interface output availability information 1109 are created from information written in a PMT.

The CPU 410 creates a piece of broadcast program attachment information 1101 for each file of partial TS stored in the HDD 401.

When a broadcast program is recorded by a timer-controlled recording with an offset, the CPU 410 writes the values "1" and "0" to differentiate between the main program and the offset.

The offset value 1106 is obtained from information of the recording time written in the EIT.

To set the EMI 1107, the CPU 410 refers to the copy control information in the PMT extracted by the TS decoder 405 and determines how copy is available for each of the main program and the offset. The information provided in the EMI 1107 may change with time even within the broadcast program. A strictly restricted value is written.

Similarly, for the bit rate information which is obtained from the PMT, the highest value of the bit rate is written.

The digital interface output availability information 1109 is also obtained from the PMT.

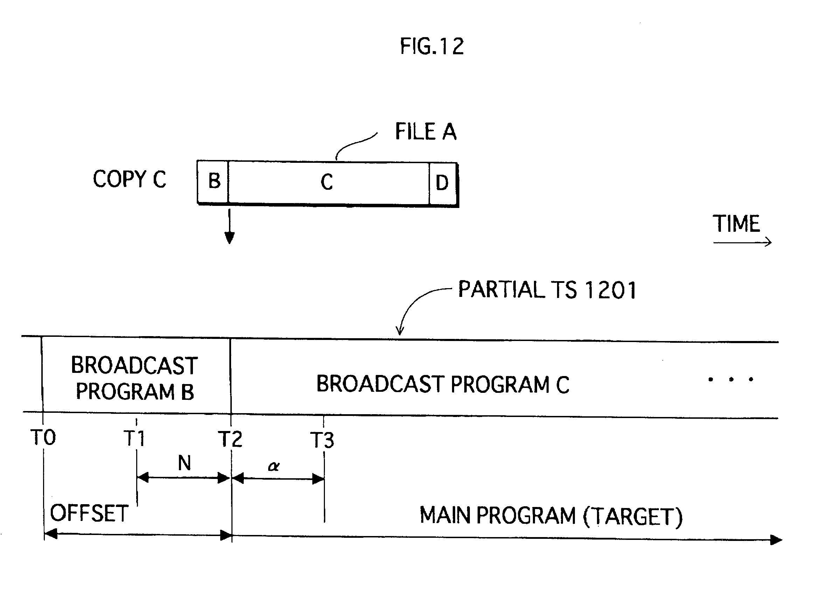

Fig. 12 is a schematic illustration of a partial TS being a file A corresponding to the broadcast program attachment information 1101. In Fig. 12, "T0" indicates the starting time of the broadcast program B being an offset. The time T0 is one minute earlier than "T2", that is, the starting time of the broadcast program C.

Times "T1" and "T3" are set empirically, where the time T1 is a predetermined time period "N" earlier than the time T2, and the time T3 is a predetermined time period "α" later than the time T2.

The time period N ranges from a point in time at which an instruction to change the recording state of the VCR 420 is issued to a point in time at which the recording operation is stabilized. The time period α is an appropriate starting time period of the broadcast program C, and the control information such as PMT for the broadcast program C is used as the default value thereof. In this example, the time periods N and α are respectively set to two seconds in advance.

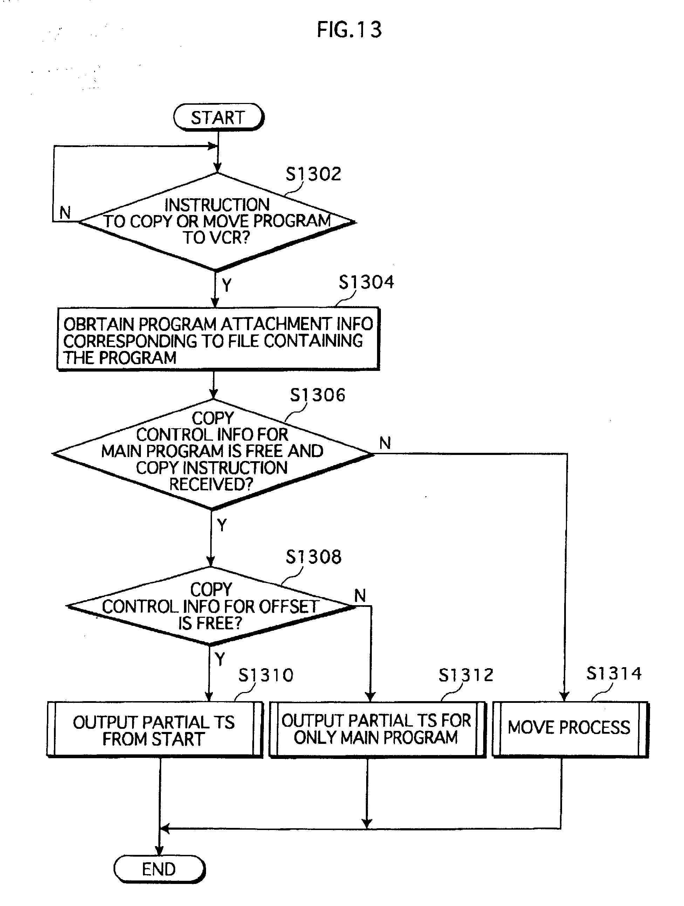

The operation of the CPU 410 will be described with reference to the flowchart shown in Fig. 13.

The CPU 410 waits for a receiving unit (not illustrated) to receive from the user an instruction to copy or move a broadcast program to the VCR 420 (S1302), and if the instruction is received, obtains apiece of broadcast program attachment information 1101, which is correlated with a partial TS containing the specified broadcast program and stored in the HDD 401 as a file, from the flash ROM 411 (S1304).

The CPU 410 then judges whether copy control information for the main program written in the EMI 1107 is set to "free" and the copy instruction has been received (S1306). If the judgment result of S1306 is affirmative, the CPU 410 judges whether copy control information for the offset is set to "free" (S1308). If the judgment result of S1308 is affirmative, the CPU 410 outputs the partial TS starting with the start of the offset andends the whole process (S1310). If the judgment result of S1308 is negative, the CPU 410 outputs the partial TS for only the main program (S1312).

If the judgment result of S1306 is negative, that is to say, if the copy control information for the main program written in the EMI 1107 is set to "copy_once" and the move instruction has been received, the CPU 410 performs the move process (S1314) .

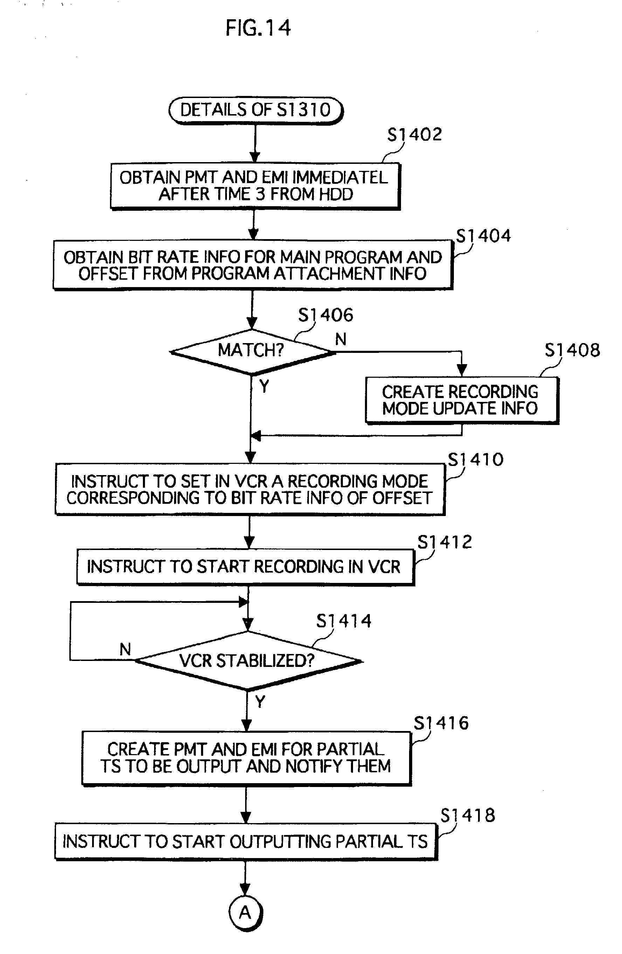

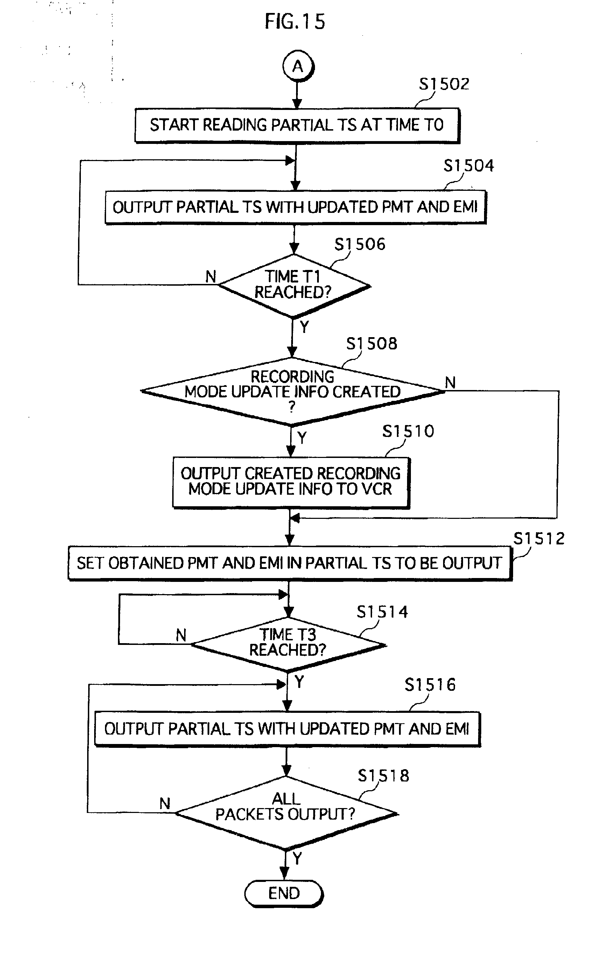

Now, the outputting of the partial TS starting with the start of the offset will be described with reference to the flowcharts shown in Figs. 14 and 15.

The CPU 410 obtains by reading from the HDD 401 the PMT and EMI in correspondence with a point in time immediately after the time T3 that is a predetermined time period "α" later than the start of the main program (broadcast program C) (S1402). The CPU 410 then obtains bit rate information for the main program and the offset from the broadcast program attachment information 1101 (S1404). The CPU 410 then judges whether the bit rate of the main program matches with that of the offset (S1406). If the judgment result of S1406 is negative, the CPU 410 creates recording mode update information that corresponds to the bit rate of the main program (S1408). More particularly, if the bit rate of the main program is 24 Mbps and the bit rate of the offset is 12b Mbps, the CPU 410 creates recording mode update information of "HS".

The CPU 410 then instructs via the digital interface 413 to set, in the VCR 420, the recording mode (for example, recording mode of STD) that corresponds to the bit rate information of the offset (S1410). The CPU 410 then instructs via the digital interface 413 to start recording in the VCR 420 (S1412). The CPU 410 then waits for stabilization of the recording operation of the VCR 420 (S1414). Generally, the stabilization requires approximately 2-5 seconds.

As is the case with Embodiment 1, the CPU 410 notifies the digital interface 413 of the PMT and EMI having been updated when the PMT and EMI included in the partial TS stored in the HDD 401 should be updated (S1416). At the same time, the CPU 410 instructs the digital interface 413 to start outputting the partial TS to the VCR 420 (S1418).

The digital interface 413, according to the instruction from the CPU 410, starts to read the partial TS at the time T0, the starting time of the broadcast program B (S1502). The digital interface 413 then outputs the partial TS to the VCR 420 after replacing the PMT and EMI with the updated PMT and EMI which have been notified from the CPU 410 (S1504). The control information such as PMT in the read partial TS is stored into the memory 412. If the control information such as PMT should be updated, the CPU 410 notifies the digital interface 413 of it as necessary. The digital interface 413 outputs the partial TS after replacing the PMT or the like with a corresponding, updated one which has been notified from the CPU 410.

The CPU 410 waits for the time T1 to be reached (s1506), and if the time T1 is reached, judges whether the recording mode update information has been created in S1408 (S1508). If the judgment result of S1508 is affirmative, the CPU 410 outputs the created recording mode update information to the VCR 420 via the digital interface 4413 (S1510).

With this operation, after the time period N has elapsed since the time T1, the recording mode in the VCR 420 is changed, for example, from STD (standard rate) to HS (high-quality rate) in a stable manner.

If the judgment result of S1508 is negative, the control moves to S1512.

In S1512, the CPU 410 adds necessary changes to the PMT and EMI obtained in S1402, and instructs the digital interface 413 to set the changes in the partial TS to be output. The digital interface 413, in accordance with the instruction from the CPU 410, outputs the partial TS to the VCR 420 (S1512). That is to say, after the time T1, the partial TS, in which the PMT and EMI corresponding to the time T3 are set, is output to the VCR 420.

The CPU 410 waits for the time T3 to be reached (S1514), and if the time T3 is reached, updates the PMT and EMI, which have been read from the HDD 401 and stored in the memory 412, as necessary, and notifies the digital interface 413 of the updated PMT and EMI. The digital interface 413 outputs the partial TS to the VCR 420 after replacing the PMT and EMI with the updated PMT and EMI which have been notified from the CPU 410 (S1516).

The digital interface 413 continues this process until all the packets in the partial TS have been output (S1518), and ends the whole process.

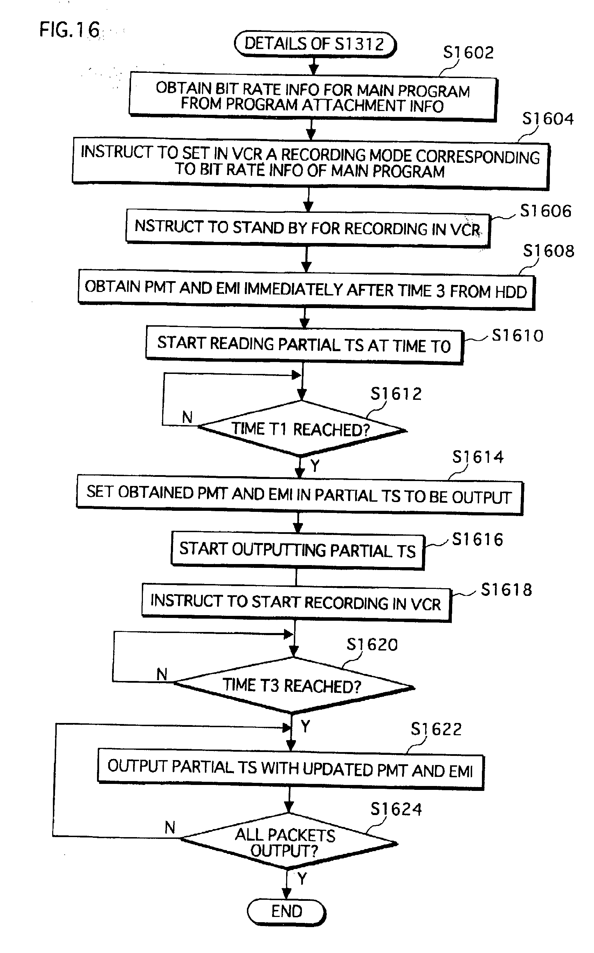

Now, the operation of outputting the partial TS for only the main program to the VCR 420 will be described with reference to the flowchart shown in Fig. 16.

This process prevents a case where the main program cannot be copied since information for the offset is set to "no_more_copies" although information for the main program is set to copy available.

The CPU 410 obtains the bit rate information corresponding to the main program from the broadcast program attachment information 1101 stored in the flash ROM 411 (S1602), instructs, via the digital interface 413, to set a recording mode corresponding to the obtained bit rate information (for example, recording mode "HS" when the bit rate information is set to 24 Mbps) in the VCR 420 (S1604).

The CPU 410 then instructs the VCR 420 to stand by for recording, via the digital interface 413 (S1606).

The CPU 410 then instructs, via the digital interface 413, to obtain by reading from the HDD 401 the PMT and EMI in correspondence with a point in time immediately after the time T3 that is a predetermined time period "α" later than the start of the main program (S1608).

The digital interface 413, according to the instruction from the CPU 410, starts to read the partial TS from the HDD 401 at the time T0 (S1610).
The CPU 410 waits for the time T1 to be reached (s1612), and if the time T1 is reached, instructs the digital interface 413 to add necessary changes to the PMT and EMI obtained in S1608, and to set the changes in the partial TS (S1614).

The digital interface 413, according to the instruction from the CPU 410, outputs the partial TS to the VCR 420 (S1616), and at the same time, instructs the VCR 420 to start recording (S1618).

The CPU 410 waits for the time T3 to be reached (S1620), and if the time T3 is reached, updates the PMT and EMI, which have been read from the HDD 401 and stored in the memory 412, as necessary, and notifies the digital interface 413 of the updated PMT and EMI. The digital interface 413 outputs the partial TS to the VCR 420 after replacing the PMT and EMI with the updated PMT and EMI which have been notified from the CPU 410 (S1622).

The digital interface 413 continues this process until all the packets in the partial TS have been output (S1624), and ends the whole process.

As described above, immediately before a recording start in the VCR 420, the present embodiment outputs the PMT and EMI at the time T3 when the main program has stabilized. This prevents the problems that a copy dropout is generated when the PAT, PMT or the like is updated when a recording target changes from the offset to the main program, and that the main program is not recorded since the EMI information of the offset is not set to "free".

It should be noted here that the flowchart shown in Fig. 16 is performed in accordance with the description in the copy control information 1107 in the broadcast program attachment information 1101 shown in Fig. 11.

The move process in S1314 is basically the same as the process shown in Figs. 14 and 15 in which the partial TS is output from the start. However, different from the copy process in the VCR 420, in the move process for moving to the VCR 420, after the partial TS is read by the digital interface 413 from the HDD 401, the partial TS is deleted from the HDD 401.

In the above description of embodiments, partial TSs are recorded in the HDD 401. However, off course, partial TSs may be recorded in a random access, large-capacity recording medium such as DVD-RAM, SD card, or semiconductor memory.

In the above description of embodiments, partial TSs are recorded in units of files. However, not limited to the this, information that manages recording positions of the partial TSs in a recording medium may be held and used so that the partial TSs can be accessed.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A digital broadcast receiving apparatus connected to an external storage apparatus, comprising:
a first storage unit;
a first control unit operable to store into the first storage unit a partial transport stream which is contained in a transport stream sent from outside and includes (i) elementary streams constituting a broadcast program and (ii) control information for controlling the broadcast program, and to create, from the control information, broadcast program attachment information which is used in outputting the partial transport stream to the external storage apparatus;
a second storage unit operable to store the created broadcast program attachment information with indication of a correspondence with the partial transport stream stored in the first storage unit;
a second control unit operable to, in accordance with the broadcast program attachment information, give an instruction to update the control information in the first storage unit; and
an interface operable to receive the update instruction from the second control unit, read the partial transport stream from the first storage unit, update the control information contained in the read partial transport stream, and output the partial transport stream with the updated control information, to the external storage apparatus.

2. The digital broadcast receiving apparatus of Claim 1 further comprising
a receiving unit operable to receive an instruction to copy or move a broadcast program, wherein
the second control unit obtains from the second storage unit a piece of broadcast program attachment information that corresponds to a partial transport stream containing the broadcast program specified in the received instruction.

3. The digital broadcast receiving apparatus of Claim 2, wherein
the first control unit includes:
a copy control information reading subunit operable to read copy control information written in a Program Map Table contained in the control information, and
the second control unit includes:
a copy control information update instructing subunit operable to, if copy control information in the piece of broadcast program attachment information is set to "copy_once", give an instruction to set the copy control information in the Program Map Table to "copy_once" and "moving", and
the interface updates the Program Map Table in accordance with the instruction given by the copy control information update instructing subunit and outputs the updated Program Map Table.

4. The digital broadcast receiving apparatus of Claim 3, wherein
the second control unit further includes
a deleting subunit operable to, if the interface has output the partial transport stream by setting the control information in the Program Map Table to "moving", delete the output partial transport stream from the first storage unit, and after the outputting is completed, delete the piece of broadcast program attachment information from the second storage unit.

5. The digital broadcast receiving apparatus of Claim 2, wherein
the control information contains a Conditional Access Table and an Entitlement Management Message,
the first control unit includes
a packet ID information reading subunit operable to read a packet identifier of the Entitlement Management Message from the Conditional Access Table,
the second control unit includes
an ID information notifying subunit operable to notify the interface of packet identifiers of (i) a Conditional Access Table and (ii) an Entitlement Management Message, which are both included in the packet ID information in the broadcast program attachment information, and
the interface outputs the partial transport stream, from which the Conditional Access Table and the Entitlement Management Message have been deleted, in conformance with a protocol defined in IEEE1394.

6. The digital broadcast receiving apparatus of Claim 1, wherein
the partial transport stream stored in the first storage unit includes at least two broadcast programs that are sequential to each other in a time domain,
the first control unit includes
a bit rate information reading subunit operable to read bit rate information for each broadcast program from a Program Map Table included in the control information,
the second control unit includes
a recording mode instructing subunit operable to obtain bit rate information from the broadcast program attachment information stored in the second storage unit, and if a bit rate for a preceding broadcast program is different from a bit rate for a succeeding broadcast program, give an instruction to set a recording mode corresponding to the bit rate for the succeeding broadcast program, and
the interface, upon receiving the instruction to set the recording mode from the recording mode instructing subunit, instructs the external storage apparatus to set a recording mode at a time a predetermined time period earlier than a time when the partial transport stream containing the broadcast program starts to be output.

7. The digital broadcast receiving apparatus of Claim 6, wherein
the predetermined time period ranges from a time when the external storage apparatus receives the instruction to set the recording mode to a time when a recording operation is stabilized.

8. The digital broadcast receiving apparatus of Claim 1, wherein
the broadcast program in the partial transport stream stored in the first storage unit has been recorded by a timer-controlled recording as a target program, and the partial transport stream also includes, as an offset, another broadcast program that precedes the target program,
the first control unit includes:
an offset time extracting subunit operable to extract a time period of the offset from an Event Information Table contained in the control information;
a copy control information creating subunit operable to create, from a Program Map Table contained in the control information, copy control information in relation to the target program and the offset,
the second control unit includes:
a control information updating subunit operable to extract a piece of control information, which corresponds to a point in time a predetermined time period α later than a start of the target program, and update the extracted control information, a default value of the time period α being determined from the control information;
an output start instructing subunit operable to, if the copy control information is set to "free" for both the target program and the offset, give an instruction to start recording in the external apparatus, and give an instruction to output the partial transport stream from a start of the offset; and
an update information notifying subunit operable to give an instruction to set the piece of control information updated by the control information updating subunit in the partial transport stream starting at a point in time a predetermined time period N earlier than the start of the target program, the predetermined time period N ranging from a time when the external storage apparatus receives an instruction to set a recording mode to a time when a recording operation is stabilized, wherein
the interface outputs to the external storage apparatus the instruction to start recording, then outputs the partial transport stream from the start of the offset, and sets the updated piece of control information in the partial transport stream starting at a point in time the predetermined time period N earlier than the start of the target program, then outputs the partial transport stream.

9. The digital broadcast receiving apparatus of Claim 8, wherein
if the copy control information is set to "free" for the target program and is set to "once" for the offset, the output start instructing subunit gives an instruction to stand by for recording in the external storage apparatus, then after the update information notifying subunit gives an instruction to set the updated piece of control information in the partial transport stream, gives an instruction to output the target program in the partial transport stream to the external storage apparatus so as to start recording.

10. A digital broadcast receiving method for use in a digital broadcast receiving apparatus connected to an external storage apparatus, comprising:
a first control step for storing into a first storage area a partial transport stream which is contained in a transport stream sent from outside and includes (i) elementary streams constituting a broadcast program and (ii) control information for controlling the broadcast program, and creating, from the control information, broadcast program attachment information, which is used in outputting the partial transport stream to the external storage apparatus, and storing into a second storage area the created broadcast program attachment information with indication of a correspondence with the partial transport stream stored in the first storage area;
a second control step for, in accordance with the broadcast program attachment information, giving an instruction to update the control information in the first storage area; and
an outputting step for receiving the update instruction, reading the partial transport stream from the first storage area, updating the control information contained in the read partial transport stream, and outputting the partial transport stream with the updated control information, to the external storage apparatus.

11. A digital broadcast receiving program applied to a digital broadcast receiving apparatus which includes a computer connected to an external storage apparatus, the digital broadcast receiving program causing the computer to execute:
a first control step for storing into a first storage area a partial transport stream which is contained in a transport stream sent from outside and includes (i) elementary streams constituting a broadcast program and (ii) control information for controlling the broadcast program, and creating, from the control information, broadcast program attachment information, which is used in outputting the partial transport stream to the external storage apparatus, and storing into a second storage area the created broadcast program attachment information with indication of a correspondence with the partial transport stream stored in the first storage area;
a second control step for, in accordance with the broadcast program attachment information, giving an instruction to update the control information in the first storage area; and
an outputting step for receiving the update instruction, reading the partial transport stream from the first storage area, updating the control information contained in the read partial transport stream, and outputting the partial transport stream with the updated control information, to the external storage apparatus.
